# EUROPÄISCHE PATENTSCHRIFT

(11) **EP 2 595 477 B1**
(45) Veröffentlichungstag und Bekanntmachung des Hinweises auf die Patenterteilung: **03.09.2014**
(21) Anmeldenummer: 12706813.8
(22) Anmeldetag: 24.02.2012
(51) Int. Cl.: A01M 1/02, A01M 1/06, C01B 31/20

(54) **VERFAHREN UND VORRICHTUNG ZUR ANLOCKUNG VON BLUTSAUGENDEN GLIEDERFÜSSERN**
METHOD AND DEVICE FOR ATTRACTING BLOODSUCKING ARTHROPODS
PROCÉDÉ ET DISPOSITIF SERVANT À ATTIRER DES ARTHROPODES HÉMATOPHAGES

(30) Priorität: 25.02.2011 DE 102011012472
(43) Veröffentlichungstag der Anmeldung: 29.05.2013
(73) Patentinhaber: Biogents AG, 93055 Regensburg (DE)
(72) Erfinder: ROSE, Andreas, 93053 Regensburg (DE); KOECKRITZ, Angela, 12437 Berlin (DE); KANT, Michael, 12683 Berlin (DE); ECKELT, Reinhard, 18059 Rostock (DE); HOANG, Dang-Lanh, 13189 Berlin (DE)
(74) Vertreter: Benninger, Johannes
(86) Internationale Anmeldenummer: PCT/EP2012/053169
(87) Internationale Veröffentlichungsnummer: WO 2012/113910

(56) Entgegenhaltungen:
- WO-A1-99/37145
- WO-A1-2004/071189
- WO-A1-2006/108244
- WO-A1-2011/144889

## Beschreibung

### Stand der Technik

Blutsaugende Gliederfüßer, insbesondere Insekten und Spinnentiere, sind bisher besonders in den Tropen und Subtropen, aber auch in den gemäßigten Breiten, eine Gefahr für die Gesundheit der sich dort aufhaltenden Menschen, da sie Krankheiten übertragen können. Gegen viele dieser Krankheiten gibt es weder Impfstoffe noch spezifische Therapien, so dass der Prävention durch Bekämpfung der Überträger eine besondere Bedeutung zukommt.

Bisher werden bei der Bekämpfung vor allem unspezifische Insektizide verwendet. Bei bestimmten Arten können auch die Brutstätten gesucht und zerstört werden. Dem persönlichen Schutz dienen weiterhin Schreckstoffe, Insektizidverdampfer und, insbesondere bei nachtaktiven blutsaugenden Gliederfüßern, Bettnetze zum Schutz vor Stichen. Auch Fanggeräte, die blutsaugende Insekten anlocken und abfangen oder abtöten, werden zur Bekämpfung eingesetzt.

Um die Wirksamkeit solcher Fallen zu steigern, werden physikalische und chemische Lockreize eingesetzt. Weiterhin ist denkbar, dass durch geeignete Lockmittel die Gliederfüßer auf Oberflächen oder in Strukturen gelockt werden, die sie mit Klebeflächen festhalten oder die mit Kontaktgiften oder mit für die Zielorganismen pathogenen Erregern versehen wurden, um die Zielorganismen, ihre arteigenen Geschlechtspartner oder ihre Nachkommen zu infizieren und somit zu zerstören.

Mit geeigneten und starken Lockmitteln könnten die Zielorganismen zumindest zeitweise auch von ihren Wirten weggelockt und / oder gefangen werden, wodurch ein zumindest vorübergehender Schutz ermöglicht werden kann.

Beispielsweise beschreibt die WO 9811774 A1 eine Insektenfalle, die Kohlenstoffdioxid und / oder andere gasförmige Lockstoffe verwendet, um die Insekten anzulocken und in einer Tasche zu fangen. Das Kohlenstoffdioxid wird hierbei der Falle direkt gasförmig zugeführt.

Das Dokument WO 2004/071189 A1 beschreibt eine Mückenfalle, bei der CO₂ durch Verbrennung vom Propan, Benzin oder Kerosin erzeugt wird. Die Verbrennung von Propan zur Erzeugung von CO₂ als Lockstoff ist in mehrfacher Hinsicht unvorteilhaft. Die Verbrennung erfolgt mittels einer offenen Flamme bei hohen Temperaturen (von über 1000°C). Je nach Qualität und Reinheit des verwendeten Propangases entstehen bei der Verbrennung Schmutzstoffe. Das durch die Verbrennung erzeugte CO₂ wird deswegen mit einem nachgeschalteten Katalysator gereinigt. Dieser Katalysator kann bei der Verwendung verschmutzen bzw. altern, so dass die Lockwirkung der Falle im Laufe der Zeit dramatisch nachlassen kann und die Falle bzw. zumindest der Katalysator ausgetauscht werden muss.

Aufgabe der Erfindung ist, ein Verfahren und eine Vorrichtung zum Anlocken von Insekten bereit zu stellen, bei der einfach, sicher und effizient ein CO₂- haltiges Lockmittelgemisch erzeugt wird. Das Verfahren und die Vorrichtung sollen hierbei die o.g. Nachteile bekannter Insektenfallen nicht aufweisen.

Die obige Aufgabe wird durch ein Verfahren und eine Vorrichtung gelöst, die die Merkmale in den Patentansprüchen 1 und 9 umfassen. Weitere vorteilhafte Ausgestaltungen werden durch die Unteransprüche beschrieben.

### Beschreibung

Die Erfindung betrifft ein Verfahren zum Anlocken von blutsaugenden Gliederfüßern, insbesondere von Insekten und Spinnentieren, wobei die Gliederfüßer insbesondere mit CO₂ angelockt werden. Die Gliederfüßer können hierbei in einer Fangvorrichtung, insbesondere einer Insektenfalle, gefangen und festgehalten und / oder getötet werden. Zur Herstellung des CO₂ wird mindestens eine flüssige oder feste organische Substanz in einem Oxidationsprozess umgesetzt. Insbesondere ist unter organischer Substanz eine organische Verbindung oder ein Gemisch aus organischen Verbindungen zu verstehen.

Erfindungsgemäß wird die Substanz in einem Oxidationsprozess zumindest teilweise vollständig und zumindest teilweise partiell umgesetzt. Dabei entsteht neben CO₂, H₂O und Wärme mindestens ein weiteres Teiloxidationsprodukt. Dieses Teiloxidationsprodukt bewirkt insbesondere eine Verstärkung der anlockenden Wirkung des Lockstoffgemisches. Auch die bei dem Oxidationsprozess entstehende Wärme stellt einen weiteren positiven Faktor für das Anlocken der Insekten o.ä. dar. Gemäß einer unten beschriebenen Ausführungsform kann die Wärme auch abgezweigt und anderweitig verwendet werden.

Insbesondere handelt es sich bei dem Oxidationsprozess der Umsetzung der organischen Substanz um einen katalytischen Oxidationsprozess.

Gemäß einer bevorzugten Ausführungsform wird die mindestens eine flüssige oder feste organische Substanz vor dem, insbesondere katalytischen, Oxidationsprozess verdampft und mit Luft zu einem Reaktions- Gasgemisch vermischt. Die Menge an zusätzlicher Luft kann hierbei insbesondere so eingestellt bzw. reguliert werden, dass der Sauerstoffgehalt nicht ausreicht, um die gesamte Brennsubstanz vollständig zu CO₂ zu oxidieren. Stattdessen kann die Menge an zusätzlicher Luft so eingestellt werden, dass besonders attraktive Oxidationsprodukt / Teiloxidationsprodukt- Gemische entstehen. Eine gezielte Steuerung der Verbrennung ist also durch eine gezielte Einstellung des Mischungsverhältnisses von Brennsubstanz und Sauerstoff möglich.

Alternativ kann eine Regulierung des Verbrennungsprozesses auch über eine Einstellung der Reaktionstemperatur erfolgen. Beispielsweise kann es vorteilhaft sein, dass die Brennsubstanz vorgeheizt wird, um gewünschte Verhältnisse an Oxidationsprodukten und Teiloxidationsprodukt(en) im Verbrennungsprodukt zu erhalten. Ebenso kann eine gezielte Kühlung vorteilhaft eingesetzt werden. Die Reaktionstemperatur kann auch über konstruktive Maßnahmen beeinflusst werden, beispielsweise durch unterschiedlich gute Isolierung verschiedener Bereiche der Vorrichtung. Weitere dem Fachmann bekannte Möglichkeiten zur gezielten Regulierung des Verbrennungsprozesses sollen ebenfalls von der Erfindung umfasst werden.

Erfolgt die Oxidation und Teiloxidation durch katalytische Verbrennung, dann wird als Katalysator vorzugsweise ein Edelmetallträgerkatalysator verwendet. Das Edelmetall des Katalysators wird aus einer Gruppe, die aus Pd, Pt, Ru, Ag, Au, Rh oder einem Gemisch aus mindestens zwei dieser Metalle besteht, ausgewählt. Das Trägermaterial ist ein anorganisches Material vorzugsweise mit oxidischer oder Spinell-Struktur, insbesondere Al₂O₃, SiO₂, Al₂O₃-SiO₂, TiO₂, ZrO₂, ein Seltenerdoxid, Fe₂O₃, ein Zeolith, ein Molekularsiebe oder ein Hydrotcalcit.

Weiterhin ist die Verwendung anderer geeigneter Katalysatoren, insbesondere von Halbedelmetallträgerkatalysatoren mit Cu, oder Übergangsmetallträgerkatalysatoren mit Mn o.ä., Mischmetallträgerkatalysatoren, oder Katalysatoren mit anderen vorzugsweise korrosionsbeständigen Metallen wie beispielsweise Ti etc. möglich.

Die Verbrennung der mindestens einen flüssigen oder festen organischen Substanz kann beispielsweise mit Hilfe einer Steuerungseinheit gezielt reguliert werden, so dass bestimmte Teiloxidationsprodukte in einem definierten Verhältnis zum CO₂ entstehen. Beispielsweise können die Reaktionsbedingungen - d.h. die Reaktionstemperatur und / oder die Menge an verfügbarem Sauerstoff etc.- für die Umsetzung von Ethanol so gewählt werden, dass definierte Mengen an Ethanal, Essigsäure, Essigsäureethylester und/ oder Diethylether, beispielsweise jeweils zwischen 0.1 ppm und 10%, vorzugsweise zwischen 0.1 ppm und 5%, entstehen und zusammen mit dem CO₂ abgegeben werden. Hierfür kann eine Steuerungseinheit vorgesehen sein, die beispielsweise mit einem chemischen Sensor zur Analyse der Zusammensetzung der Oxidations- und Teiloxidationsprodukte und mit einem Mittel zur Regulierung der Luftzufuhr oder der Reaktionstemperatur o.ä. verbunden ist. Die gewünschte Zusammensetzung an Verbrennungsprodukten kann beispielsweise in die Steuerungseinheit eingegeben werden. Aufgrund der sensorisch ermittelten chemischen Daten reguliert die Steuerungseinheit die Luftzufuhr und / oder die Reaktionstemperatur etc. entsprechend nach, um die Menge an Oxidations- und Teiloxidationsprodukten entsprechend einzustellen.

Ein besonderer Vorteil des katalytischen Verfahrens besteht darin, dass keine Verbrennung bei offener Flamme durchgeführt werden muss. Somit kann das Verfahren bei Temperaturen durchgeführt werden, die deutlich unterhalb der Verbrennungstemperatur der verwendeten flüssigen oder festen organischen Substanz liegen. Dies vermindert die Brandgefahr und erhöht die Sicherheit für den Benutzer.

Die bei der Umsetzung entstehende Wärme kann gemäß einer weiteren Ausführungsform verwendet werden, um elektrische Spannung zu generieren und die zugeordnete Fangvorrichtung zumindest teilweise anzutreiben. Beispielsweise kann mindestens ein Seebeck- Element eingesetzt werden, um den Betrieb der elektrischen Bauteile der Vorrichtung zur Durchführung des beschriebenen Verfahrens und/ oder der mit ihr verbundenen Fangvorrichtung zumindest teilweise zu sichern.

Die zur Herstellung des CO₂ verwendete flüssige oder feste organische Substanz wird aus einer Gruppe bestehend aus Alkoholen, Ketonen, Aldehyden, Kohlenwasserstoffen, Olefinen, Ethern, Carbonsäureestern, Fetten oder Ölen ausgewählt. Vorzugsweise werden Alkohole, insbesondere Methanol, Ethanol oder Brennspiritus, verwendet.

Mit dem Verfahren wird also Kohlendioxid als Produkt der Totaloxidation hergestellt. Parallel dazu wird gezielt ein Anteil an partialoxidiertem Produkt / partialoxidierten Produkten hergestellt, welche ebenfalls als Lockstoff(e) für blutsaugende Insekten wirken und die Attraktivität des Kohlendioxids steigern.

Die Erfindung betrifft weiterhin eine Vorrichtung zur Erzeugung von CO₂ zum Anlocken von blutsaugenden Gliederfüßern. Diese Vorrichtung eignet sich beispielsweise zur Verwendung in Kombination mit einer Fangvorrichtung für Insekten, blutsaugende Gliederfüßer etc. Die Vorrichtung umfasst eine Speichervorrichtung und ein Verdampfungsmodul für die mindestens eine flüssige oder feste organische Reaktionssubstanz. Erfindungsgemäß weist die Vorrichtung ein Reaktormodul für die Oxidation und/ oder Teiloxidation der mindestens einen flüssigen oder festen organischen Substanz auf. Weiterhin kann das Reaktormodul Mittel zur Regulation des Oxidations- und Teiloxidationsprozesses und eine Steuerungseinheit zur Regulation des Oxidations- und/ oder Teiloxidationsprozesses aufweisen. Insbesondere sind im Reaktormodul definierte Reaktionsbedingungen einstellbar, so dass die Menge an entstehendem Partialoxidationsprodukt(en) gezielt eingestellt werden kann. Beispielsweise umfasst die Vorrichtung eine regelbare Luftzufuhr o.ä., mit der die Sauerstoffzufuhr gezielt reguliert und somit die Menge und / oder Zusammensetzung von dem mindestens einem entstehenden Partialoxidationsprodukt eingestellt werden kann. Die entstehenden Partialoxidationsprodukte z.B. Aldehyde, Ketone, Carbonsäuren, Ester, Ether etc. sind dem entstehenden CO₂- Strom in geringen Anteilen beigemischt, wodurch die Lockwirkung der Vorrichtung erhöht wird. Weiterhin oder alternativ können Heiz- und / oder Kühlelemente vorgesehen sein, die dazu dienen, die Reaktionstemperatur einzustellen, die Reaktionssubstanz vorzutemperieren etc.

Die Vorrichtung kann weiterhin in ihrem Reaktormodul einen Katalysator für die gesteuerte katalytische Oxidation und Teiloxidation der mindestens einen flüssigen oder festen organischen Substanz umfassen.

Die Vorteile des Verfahrens und der Vorrichtung gegenüber den herkömmlich bekannten Methoden und Vorrichtungen zur Herstellung von Kohlendioxid insbesondere im Zusammenhang mit Fangvorrichtungen bestehen hauptsächlich in einer wesentlichen Vereinfachung des technischen Ablaufs des Oxidationsprozesses. Durch die Verwendung einer organischen Reaktionssubstanz in flüssigem oder festem Aggregatzustand anstelle von beispielsweise Propangas o.ä. kann die Sicherheit der Vorrichtung für den Benutzer wesentlich erhöht werden. Ein einfacherer und gefahrloser dezentraler Einsatz der Vorrichtung ist möglich. Erforderliche organische Medien können problemlos ohne die Verwendung von Druckgasflaschen verwendet werden, wodurch die Lagerung des Brennstoffs vereinfacht ist. Das ist als Vorteil insbesondere für den Einsatz in infrastrukturarmen ländlichen Gebieten zu sehen. Ein weiterer Vorteil der Vorrichtung und des Verfahrens besteht darin, dass geringere Mengen an organischer Reaktionssubstanz benötigt werden, um vergleichbare Anlockungsergebnisse zu erzielen. Dadurch ist es möglich, die gesamte Vorrichtung kleiner und leichter auszuführen, wodurch sie für den Benutzer einfacher zu transportieren ist.

Bei der katalytischen Umsetzung der Brennsubstanz wird CO₂ und mindestens ein Teiloxidationsprodukt vorzugsweise durch eine katalytische Oxidation bzw. Teiloxidation erzeugt. Dabei erfolgt vorzugsweise keine Verbrennung mit offener Flamme. Insbesondere kann damit die Bildung von Ruß oder ähnlichen Bestandteilen vermieden werden, die den Katalysator schädigen oder Stechmücken o.ä. abschrecken können. Da die Vorrichtung keine offene Flamme benötigt, ist es möglich, die Vorrichtung kleiner zu gestalten, wodurch sie zudem kostengünstiger hergestellt werden kann.

Mit der erfindungsgemäßen Vorrichtung und dem erfindungsgemäßen Verfahren können somit einfach, schnell und kostengünstig CO₂- haltige Lockstoffgemische erzeugt werden, die eine höhere Attraktivität für blutsaugende Gliederfüßer als reines CO₂ zeigen. Insbesondere zeigen Stechmücken o.ä. eine höhere Orientierung zu dem CO₂- haltigen Lockstoffgemisch.

Weiterhin ist es auf diese Weise einfach möglich, Lockstoffgemische zu erzeugen, die besonders attraktiv für bestimmte Arten von blutsaugenden Gliederfüßern sind. Dies erlaubt ein gezieltes Anlocken bestimmter Arten. Dies kann beispielsweise vorteilhaft für Forschungszwecke eingesetzt werden.

### Figurenbeschreibung

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine erste Ausführungsform einer erfindungsgemäßen Vorrichtung zur Herstellung von CO₂ zum Anlocken von blutsaugenden Gliederfüßern.
Figur 2 zeigt eine erste Ausführungsform einer erfindungsgemäßen Vorrichtung gemäß Figur 1 mit Steuerung.
Figur 3 zeigt eine zweite Ausführungsform einer Vorrichtung zur Herstellung von CO₂ zum Anlocken und Fangen von blutsaugenden Gliederfüßern.
Figur 4 zeigt ein Olfaktometer zur Messung der Attraktivität eines Lockstoffes / Lockstoffgemisches (Stand der Technik).
Figur 5 bis Figur 7 vergleichen die Attraktivität von reinem CO₂ mit der Attraktivität des mit einer erfindungsgemäßen Vorrichtung hergestellten Lockstoffgemisches.
Figuren 8 und 9 vergleichen die Attraktivität des mit einer erfindungsgemäßen Vorrichtung hergestellten Lockstoffgemisches bei unterschiedlicher Zumischung von Luft.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

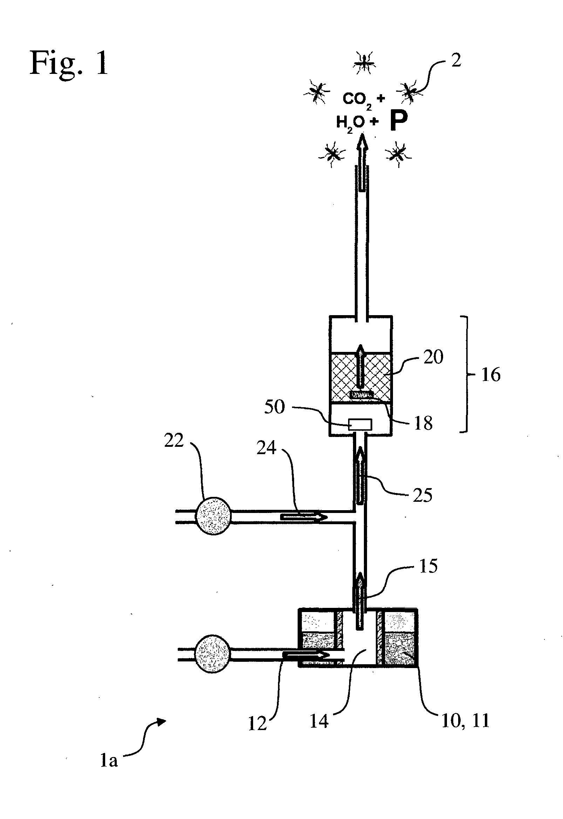

Figur 1 zeigt eine erste Ausführungsform einer Vorrichtung 1 a zur Herstellung eines CO₂- haltigen Lockstoffgemisches zum Anlocken von blutsaugenden Gliederfüßern 2. Das Lockstoffgemisch wird insbesondere durch katalytische Oxidation und Teiloxidation hergestellt. Die Vorrichtung 1 a umfasst eine Speichereinheit 10 für die zu oxidierende flüssige oder feste organische Substanz 11. Zuerst wird ein regelbarer oder festeingestellter Luftstrom 12 produziert, der in einem geeigneten Verdampfermodul 14 mit der Substanz 11 versetzt und dann als erstes Gasgemisch 15 einem Reaktormodul 16 zugeleitet wird.

Das Reaktormodul 16 umfasst ein Katalysatorbett 20 und ein Heizelement 18 zur Einstellung der notwendigen Starttemperatur für die katalytische Voll- und Teiloxidation der Reaktionssubstanz 11. Im Reaktormodul 16 befindet sich weiterhin eine Flammenrückschlagsicherung 50. Diese dient als Schutzvorrichtung, falls sich das erste Gasgemisch 15 in der Reaktorkammer 16, beispielsweise aufgrund einer Überhitzung des Katalysators, ungewollt entzünden sollte. Die Flammenrückschlagsicherung 50 verhindert dann, dass die in Folge einer Fehlfunktion entstandenen Flamme des ersten Brennstoff- Luft- Gasgemisches 15 in das Verdampfermodul 14 eindringt.

Weiterhin kann die Vorrichtung 1 a eine Regulierungsvorrichtung 22, insbesondere eine regelbare und/ oder fest einstellbare Luftzufuhr o.ä. umfassen, mit der die Reaktionsbedingungen gezielt eingestellt werden können, so dass definierte Mengen an CO₂ und gewünschten Teiloxidationsprodukten P hergestellt werden können. Vorzugsweise wird die Zuluft 24 dem ersten Gasgemisch 15 aus verdampfter Substanz 11 und Luft 12 vor dem Reaktormodul 16 beigemischt, um das für die katalytische Umsetzung optimale Verhältnis von organischer Substanz 11 und Sauerstoff einzustellen.

Das zweite Gasgemisch 25 aus verdampfter Substanz 11 und Luft 12 bzw. Zuluft 24 durchströmt die Flammenrückschlagsicherung 50 und anschließend das Katalysatorbett 20, in dem durch das Erhitzen durch eine passende Wärmequelle, insbesondere durch ein Heizelement 18 oder nach autokatalytischer Zündung die katalytische Oxidationsreaktion startet. Insbesondere beträgt der Volumenstrom durch das Katalysatorbett zwischen 50ml/min und ca. 800ml/min. Der Volumenstrom hängt insbesondere von der Menge CO₂ ab, die produziert werden soll. Weitere Komponenten, die den Volumenstrom beeinflussen und entsprechend eingestellt werden können, sind die Art des verwendeten Brennstoffs und die Menge an Zusatzluft.

Bei der Oxidationsreaktion entstehen CO₂, H₂O und Wärme sowie gegebenenfalls Partialoxidationsprodukte X. Diese werden von der Vorrichtung 1 a abgegeben und bewirken das Anlocken der Gliederfüßer 2. Durch die Partialoxidationsprodukte P verbessert sich die anlockende Wirkung der Vorrichtung 1 a. Die Lockstoffwirkung ist gegenüber herkömmlichen Vorrichtungen, die CO₂ abgeben, um bis zu 50% oder mehr erhöht, insbesondere findet man eine Erhöhung der anziehenden Wirkung des Oxidationsprodukt- und Teiloxidationsprodukt-Gemisches von bis zu 60% gegenüber einer vollständigen Verbrennung eines Brennstoffes. Mit der erfindungsgemäßen Vorrichtung konnte beispielsweise eine Verdreifachung der Fangrate erzielt werden.

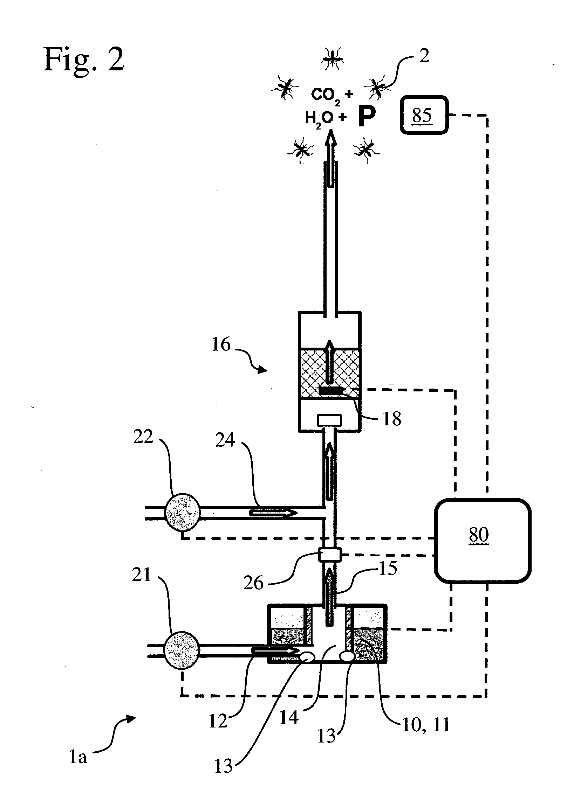

**Figur 2** zeigt eine erste Ausführungsform einer erfindungsgemäßen Vorrichtung 1 a gemäß **Figur 1** mit Steuerung 80. Die Steuerung reguliert beispielsweise die Luftzufuhr 22 der dem ersten Gasgemisch 15 zugemischten Zuluft 24. Weiterhin kann vorgesehen sein, dass die Steuerung 80 das Heizelement 18 und somit die Reaktionstemperatur im Reaktormodul 16 reguliert, wodurch ebenfalls die Menge an partieller Oxidation reguliert werden kann. **Figur 2** zeigt weiterhin eine optionale regelbare Luftzufuhr 21, über die die Menge an Luft 12, die dem Verdampfermodul 14 zugeführt wird, gezielt über die Steuerung 80 eingestellt werden kann. Zudem können regulierbare bzw. steuerbare Mittel 13 im Verdampfungsmodul 14 vorgesehen werden, die die Freisetzung von Brennsubstanz 11 in das Verdampfungsmodul 14 kontrollieren. Hinter dem Verdampfungsmodul 14 und vor dem Zumischen von Zuluft 24 kann zudem ein Ventil 26 angeordnet sein, dass die Menge an erstem Gasgemisch 15 einstellt, die pro Zeiteinheit an das Reaktormodul16 weitergeleitet wird.

Weiterhin ist ein chemischer Sensor 85 dargestellt. Dieser ermittelt die Zusammensetzung der Oxidations- und Teiloxidationsprodukte (CO₂ und X) und ist über die Steuerung 80 mit einem der beschriebenen Mittel 21, 22 zur Regulierung der Luftzufuhr oder einem Mittel 13, 26 zur Einstellung des ersten Gasgemisches 15 oder einem Mittel 18 zur Einstellung der Reaktionstemperatur o.ä. verbunden. Die gewünschte Zusammensetzung an Verbrennungsprodukten -d.h. CO₂, H₂O sowie Partialoxidationsprodukt(e) P - kann beispielsweise in die Steuerungseinheit 80 eingegeben werden. Aufgrund der sensorisch ermittelten chemischen Daten reguliert die Steuerungseinheit 80 die Luftzufuhr 21, 22 und / oder die Reaktionstemperatur 18 etc. entsprechend nach, um die Zusammensetzung an Lockstoffgemisch entsprechend einzustellen.

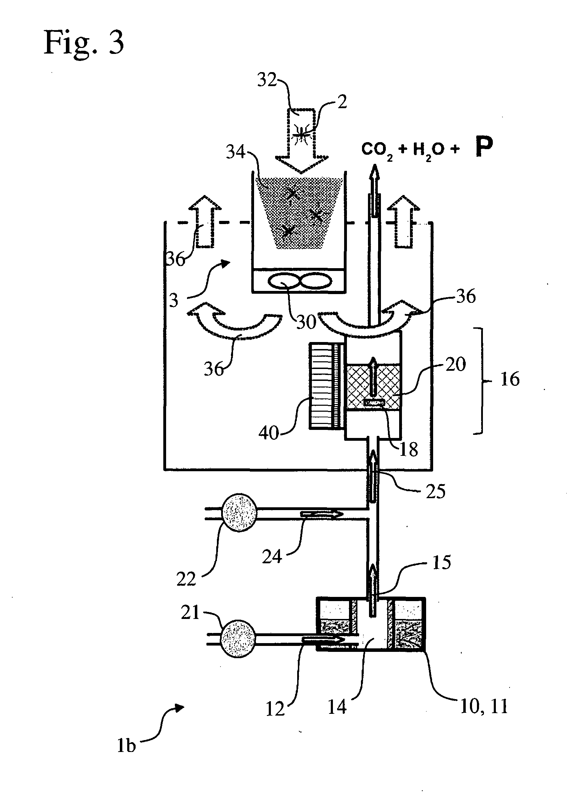

**Figur 3** zeigt eine zweite Ausführungsform einer Vorrichtung 1 b zur Herstellung eines CO₂- haltigen Lockstoffgemisches zum Anlocken von blutsaugenden Gliederfüßern 2. Diese ist direkt mit einer Vorrichtung 3 zum Fangen oder zeitweisen Festhalten der angelockten Gliederfüßer 2 kombiniert.

Die CO₂ herstellende Vorrichtung 1 b ist so neben der Fangvorrichtung 3 angeordnet, dass die Oxidationsprodukte CO₂, H₂O und das mindestens eine Teiloxidationsprodukt P in der Nähe einer Einsaugvorrichtung 30 freigesetzt werden, durch die die angelockten Gliederfüßer 2 durch einen Einsaugstrom 32 eingesogen und in einer geeigneten Auffangvorrichtung 34 festgehalten werden. Weitere dem Fachmann bekannte, nicht ausschließliche Möglichkeiten bestehen beispielsweise in dem Anlocken der Gliederfüßer 2 auf Klebeflächen, auf Oberflächen oder in Labyrinthen, die mit Kontaktgiften oder Organismen versehen sind, die für die Gliederfüßer 2 oder ihre Nachkommen pathogen sind.

Das Reaktormodul 16 kann dabei so angebracht sein, dass es beispielsweise den aus der Falle 3 ausströmenden Luftstrom 36 erwärmt und/ oder Wärmestrahlung abgibt, was für blutsaugende Gliederfüßer 2 zusätzlich attraktiv ist.

Die durch das Reaktormodul 16 produzierte Wärme kann beispielsweise genutzt werden, um durch den Einsatz von einem oder mehreren Seebeck- Elementen 40 eine elektrische Spannung zu generieren, die den Betrieb der elektrischen Bauteile der Vorrichtung 1 b und/ oder der mit ihr verbundenen Fangvorrichtung 3 zumindest teilweise sichern.

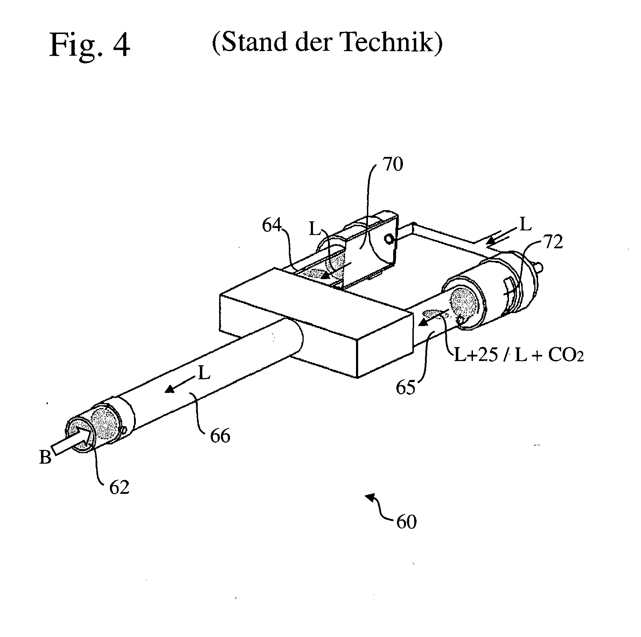

**Figur 4** zeigt ein Olfaktometer 60 zur Messung der Attraktivität eines Lockstoffes oder Lockstoffgemisches gemäß dem bekannten Stand der Technik. Olfaktometertests sind besonders während der Produktentwicklung geeignet, um aus einer Reihe interessanter Lock- oder Schreckstoffkandidaten schnell und kostengünstig die vielversprechendsten Substanzen herauszufiltern. Das Olfaktometer 60 weist insbesondere die Form eines "Y" auf. Ein Käfig mit stechfreudigen Mückenweibchen wird am unteren Ende 62 des "Y" an das klimatisierte Röhrensystem des Olfaktometers 60 angeschlossen. Die beiden Arme 64 und 65 des "Y" enthalten jeweils die Kontrollkammer 70 und die Testkammer 72. Beide Kammern 70, 72 werden jeweils durch Luft L durchströmt, die anschließend in dem Basisschenkel 66 des "Y" zusammengeführt wird. Während der Reizgabe können die Testmücken in Bewegungsrichtung B in das die Olfaktometer 60 einfliegen und sich zwischen der Testkammer 72 mit Reizluft und der Kontrollkammer 70 mit Reinluft entscheiden. Das Olfaktometer 60 wird in der zur Bewegungsrichtung B der Mücken entgegengesetzten Richtung mit Luft L durchströmt, die den Lockstoff aus der Testkammer 72 mitreißt.

Zum einen ermittelt man die Aktivierung der Testmücken. Darunter versteht man ein ungerichtetes Losfliegen bei Reizgabe, insbesondere entspricht dies dem Prozentsatz an Mücken, die überhaupt in das Olfaktometer 60 einfliegen. Durch Auszählen der Mücken in der Testkammer 72 ermittelt man weiterhin die Orientierung, d.h. den Prozentsatz an Mücken, die gezielt zum Testreiz hingeflogen sind.

Ein Olfaktometer 60 kann beispielsweise verwendet werden, um potentiell repellierende Substanzen zu testen. Diese werden z.B. auf Filterpapier aufgebracht und zusammen mit einem menschlichen Finger in die Apparatur gehalten. Als Vergleich wird der menschliche Finger alleine getestet. Die Reduktion der Attraktivität des Fingers während der Schreckstofftests gibt Aufschluss über das repellierende Potential der Testsubstanz. Attraktive Duftreize werden z.B. in Form von Dispensern oder mit Hilfe von Druckluft mit bestimmten Durchflussraten in die Apparatur eingeleitet und ebenfalls mit Tests eines menschlichen Fingers verglichen, um Hinweise auf das anlockende Potential für Stechmücken zu erhalten.

Im vorliegenden Fall wird beispielsweise in einer Kontrollversuchsreihe reines CO₂ in die Testkammer 72 eingeleitet. Parallel dazu werden in einem weiteren Olfaktometer 60 die Oxidations- /Teiloxidationsprodukte CO₂ und P aus der erfindungsgemäßen Vorrichtung 1 (vgl. **Figuren 1 bis 3**) in die Testkammer 72 eingeleitet und die Ergebnisse der beiden Versuchsreihen miteinander verglichen.

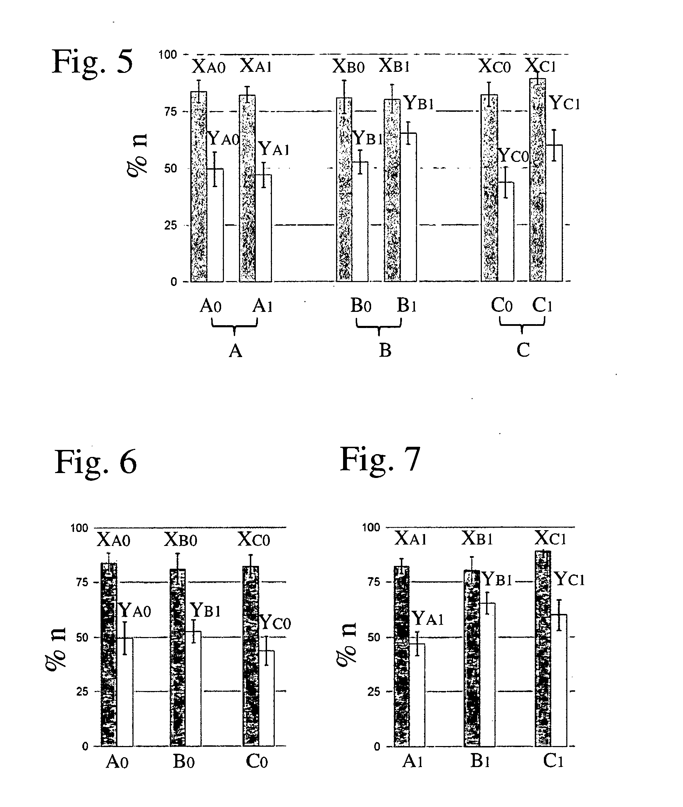

**Figuren 5 bis 7** vergleichen die Attraktivität von reinem CO₂ mit der Attraktivität des Lockstoffgemisches einer erfindungsgemäßen Vorrichtung. Bei diesen Versuchen wurden die Attraktivität von unterschiedlichen Konzentrationen A₀, B₀, C₀ an reinem CO₂ mit der Attraktivität von unterschiedlichen Lockstoffgemischen A₁, B₁, C₁ im Olfaktometer 60 (vgl. **Figur 4**) verglichen. Die jeweilig gewählten Versuchsbedingungen sind tabellarisch aufgelistet:

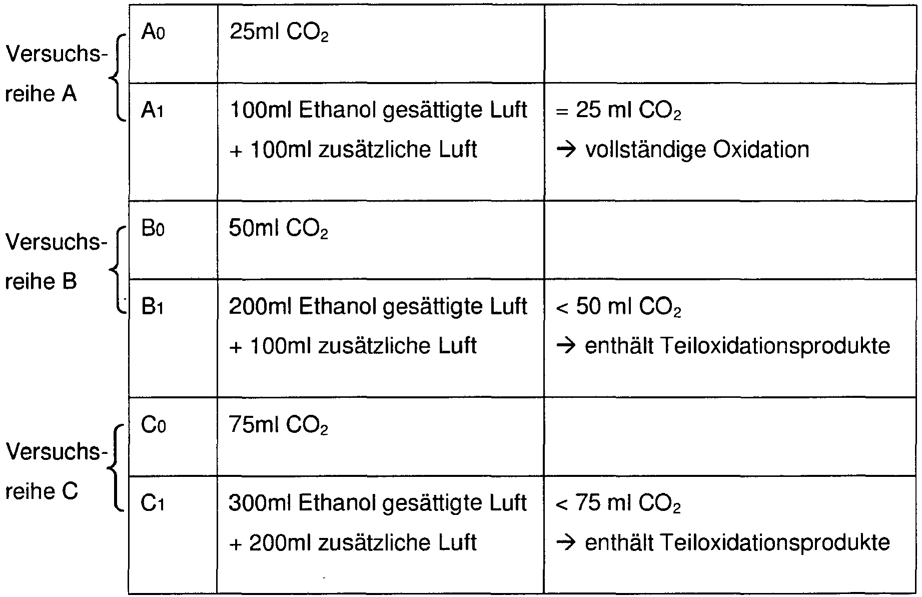

Insbesondere wurden für die Versuchsreihen A₁, B₁, C₁ unterschiedliche Mengen an mit Ethanol gesättigter Luft und zusätzlicher Luft in einer erfindungsgemäßen Vorrichtung 1 verbrannt. Je nachdem, wie viel zusätzliche Luft verwendet wird, kann gezielt eine vollständige Oxidation (Versuch A₁) oder gezielt eine partielle Oxidation (Versuche B₁, C₁) eingestellt werden.

Vergleicht man die Kontroll- Versuchsreihen A₀, B₀, C₀ miteinander (vgl. auch **Figur 6**), bei denen jeweils reines CO₂ als Lockmittel verwendet wird, so findet man jeweils eine ungerichtete Aktivierung X_{A0}, X_{Bo} und X_{C0} von ca. 83% (X_{A0}: 84%; X_{B0}: 81,5%; und X_{C0}: 82,4%) der verwendeten Anzahl n an Mückenweibchen und ein gerichtete Orientierung Y_{A0}, Y_{Bo} und Y_{C0} von ca. 50% (Y_{A0}: 50%; Y_{B0}: 52,1%; und Yco: 43,7%), unabhängig von der verwendeten CO₂- Konzentration. D.h. die Anwesenheit von CO₂ dient als deutlicher Lockstoff, wobei die Konzentration keinen spürbaren Einfluss zeigt.

Vergleicht man die Ergebnisse in Versuchsreihe A, dann ergibt sich folgendes Bild: Bei der Verbrennung von 100ml Ethanol gesättigter Luft mit 100ml zusätzlicher Luft (Versuch A₁) entstehen durch vollständige Oxidation 25ml CO₂. Beim Vergleich mit der Kontroll- Versuchsreihe A₀, wobei direkt 25ml CO₂- Gas eingesetzt werden, ergibt sich eine vergleichbare Aktivierung X_{A0} und X_{A1} von ca. 84% und 82,4% der eingesetzten Anzahl n an Mücken. Weiterhin ergibt sich eine vergleichbare Orientierung Y_{A0} und Y_{A1} von ca. 50% und 47,1% der eingesetzten Anzahl n an Mücken. Bei vollständiger Oxidation des Brennstoffs Ethanol ergibt sich somit für das Lockstoffgemisch aus der erfindungsgemäßen Vorrichtung eine Attraktivität, die der Attraktivität von Fallen entspricht, bei denen direkt CO₂ verwendet wird.

Vergleicht man die Ergebnisse in Versuchsreihe B, dann ergibt sich folgendes Bild: Bei der Verbrennung von 200ml Ethanol gesättigter Luft mit 100ml zusätzlicher Luft (Versuch B₁) entstehen weniger als 50ml CO₂, da der Sauerstoffgehalt nicht für eine vollständige Oxidation ausreicht und somit auch Teiloxidationsprodukte entstehen. Beim Vergleich mit der Kontrolle B₀, wobei direkt 50ml CO₂- Gas eingesetzt wurden, ergibt sich eine vergleichbare Aktivierung X_{B0} und X_{B1} von ca. 81,5% der eingesetzten Anzahl n an Mücken. Jedoch ist die Orientierung Y_{B1} des Lockstoffgemisches bei der erfindungsgemäßen Oxidation / Teiloxidation deutlich erhöht, insbesondere liegt die Orientierung Y_{B1} bei ca. 65%, während die Orientierung Y_{B0} in der Kontrollgruppe bei ca. 50% liegt. Dies entspricht einer Steigerung der Attraktivität in Bezug auf die Orientierung Y um ca. 30%.

Vergleicht man die Ergebnisse in Versuchsreihe C, dann ergibt sich folgendes Bild: Bei der Verbrennung von 300ml Ethanol gesättigter Luft mit 200ml zusätzlicher Luft (Versuch B₁) entstehen weniger als 75ml CO₂, da der Sauerstoffgehalt nicht für eine vollständige Oxidation ausreicht und somit auch Teiloxidationsprodukte entstehen. Beim Vergleich mit der Kontrolle Co, wobei direkt 75ml CO₂- Gas eingesetzt wurden, ergibt sich eine verbesserte Aktivierung X_{B1} von ca. 88% gegenüber der Aktivierung X_{B0} der Kontrollgruppe von ca. 81,5%. Dies entspricht einer Steigerung der Attraktivität in Bezug auf die Aktivierung X um ca. 9%. Weiterhin ist die Orientierung Y_{B1} deutlich erhöht, insbesondere liegt die Orientierung Y_{B1} bei ca. 60%, während die Orientierung Y_{B0} der Kontrollgruppe bei ca. 43% lag. Dies entspricht einer Steigerung der Attraktivität in Bezug auf die Orientierung Y um ca. 40%.

Vergleicht man weiterhin die Ergebnisse der Versuchsreihen A₁, B₁, C₁ miteinander (vgl. **Figur 7**), bei denen jeweils unterschiedliche Lockstoffgemische aus Ethanol gesättigter Luft und zusätzlicher Luft mittels einer erfindungsgemäßen Vorrichtung hergestellt werden, dann ergibt sich, dass durch gezielte Einstellung der Menge an Teiloxidation durch Regulierung der zusätzlichen Luftzufuhr zum einen die Aktivierung und / oder die Orientierung der Mücken verbessert werden kann. Beide Faktoren sind Indikatoren für eine bessere Lockstoffwirkung des Verbrennungsproduktes.

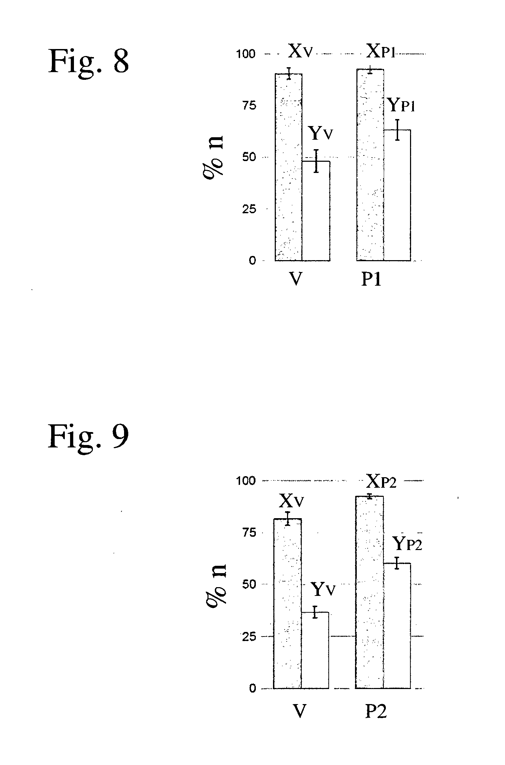

**Figuren 8 und 9** vergleichen die Attraktivität des Lockstoffgemisches bei unterschiedlicher Zumischung von Luft.

| | | |
|---|---|---|
| V | 100ml Ethanol gesättigte Luft + 100ml zusätzliche Luft | = 25 ml CO₂ |
| | | → vollständige Oxidation |
| P₁ | 100ml Ethanol gesättigte Luft + 75ml zusätzliche Luft | < 25 ml CO₂ |
| | | → enthält Teiloxidationsprodukte |
| P₂ | 100ml Ethanol gesättigte Luft + 50ml zusätzliche Luft | < 25 ml CO₂ |
| | | → enthält Teiloxidationsprodukte |

**Figur 8** zeigt Parallel- Versuche einer Kontrollgruppe V mit vollständiger Oxidation des Ethanols zu 25 ml CO₂ in der erfindungsgemäßen Vorrichtung und einer Testgruppe P1 mit Oxidation und Teiloxidaton des Ethanols in der erfindungsgemäßen Vorrichtung. Diese Versuche bestätigen wiederum die Ergebnisse der Versuchsreihe C aus **Figur 5** und zeigen eine verbesserte Aktivierung X_{P1} von ca. 93% gegenüber Xv von ca. 89% in der Kontrollgruppe V. Dies entspricht einer Steigerung der Attraktivität in Bezug auf die Aktivierung X um ca. 5%. Weiterhin findet man eine verbesserte Orientierung der Mücken Y_{P1} von ca. 65% gegenüber Yv von ca. 48%. Dies entspricht einer Steigerung der Attraktivität in Bezug auf die Orientierung Y um ca. 35%.

**Figur 9** zeigt Parallel- Versuche einer Kontrollgruppe V mit vollständiger Oxidation des Ethanol zu 25 ml CO₂ und einer Testgruppe P2 mit Oxidation und Teiloxidaton des Ethanol in der erfindungsgemäßen Vorrichtung, wobei die Menge an zusätzlicher Luft im Vergleich zu den in **Figur 8** dargestellten Versuchsergebnissen weiter reduziert wurde, so dass noch mehr Teiloxidationsprodukte entstehen. Auch hierbei zeigen sich eine verbesserte Aktivierung X_{P1} von ca. 93% gegenüber Xv von ca. 81%. Dies entspricht einer Steigerung der Attraktivität in Bezug auf die Aktivierung X um ca. 15%. Weiterhin findet man eine verbesserte Orientierung der Mücken Y_{P2} von ca. 60% gegenüber Yv von ca. 37%. Dies entspricht einer Steigerung der Attraktivität in Bezug auf die Orientierung Y um ca. 62%.

Die in den **Figuren 8 und 9** dargestellten Ergebnisse verdeutlichen noch einmal, dass über eine gezielte Steuerung der Oxidation und Teiloxidation eine Verbesserung der Attraktivität, insbesondere eine Verbesserung der Orientierung Y bewirkt werden kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1a/ 1b: Vorrichtung zur Herstellung von CO₂
- 2: blutsaugende Gliederfüßer
- 3: Fangvorrichtung
- 10: Speichereinheit
- 11: organische Substanz
- 12: Luftstrom
- 13: regulierende Mittel
- 14: Verdampfungsmodul
- 15: erstes Gasgemisch
- 16: Reaktormodul
- 18: Heizelement
- 20: Katalysatorbett
- 21: erste Regulierungsvorrichtung
- 22: zweite Regulierungsvorrichtung
- 24: Zuluft
- 25: zweites Gasgemisch
- 26: Ventil
- 30: Einsaugvorrichtung
- 32: Einsaugstrom
- 34: Auffangvorrichtung
- 36: ausströmender Luftstrom
- 40: Seebeck- Element
- 50: Flammenrückschlagsicherung
- 60: Olfaktometer
- 62: unteres Ende
- 64: Arm
- 65: Arm
- 66: Basisschenkel
- 70: Kontrollkammer
- 72: Testkammer
- 80: Steuerung
- 85: Sensor

- B: Bewegungsrichtung
- L: Luft
- n: Anzahl
- P: Teiloxidationsprodukt
- X: Aktivierung
- Y: Orientierung

## Patentansprüche

1. Verfahren zur Herstellung von CO₂ zum Anlocken von blutsaugenden Gliederfüßern (2), **dadurch gekennzeichnet, dass** mindestens eine flüssige oder feste organische Substanz (11) in einem Oxidationsprozess gezielt teilweise vollständig und teilweise partiell umgesetzt wird, so dass neben CO₂, H₂O und Wärme mindestens ein weiteres Teiloxidationsprodukt (P) entsteht, wobei die organische Substanz (11) aus einer Gruppe bestehen aus Alkoholen, Ketonen, Aldehyden, Kohlenwasserstoffen, Olefinen, Ethern, Carbonsäureestern, Fetten oder Ölen ausgewählt wird.

2. Verfahren nach Anspruch 1, wobei der Oxidationsprozess ein katalytischer Oxidationsprozess ist.

3. Verfahren nach Anspruch 1, wobei die Oxidation und die Teiloxidation über Mittel (13, 18, 21, 22, 26) zur Regulierung des Oxidations- und Teiloxidationsprozesses und eine Steuerungseinheit (80) reguliert werden, so dass mindestens ein Teiloxidationsprodukt (P) in einem definierten Verhältnis zum CO₂ entsteht, insbesondere wobei zwischen 0,1 ppm und 10% Teiloxidationsprodukt (P) entsteht.

4. Verfahren nach Anspruch 1 oder 2, wobei die Oxidation und die Teiloxidation von Ethanol über Mittel (13, 18, 21, 22, 26) zur Regulierung des Oxidations- und Teiloxidationsprozesses und eine Steuerungseinheit (80) reguliert werden, so dass definierte Mengen an Ethanal, Essigsäure, Essigsäureethylester und/ oder Diethylether in einem definierten Verhältnis insbesondere zwischen 0,1 ppm und 10%, entstehen.

5. Verfahren nach einem der Ansprüche 2 bis 3, wobei
* eine gewünschte Zusammensetzung von CO₂ und Teiloxidationsprodukt (P) in die Steuerungseinheit (80) eingegeben wird;
* eine chemische Analyse der Zusammensetzung aus CO₂ und Teiloxidationsprodukt (P) oder Teiloxidationsprodukten durchgeführt wird und
* Mittel (13, 18, 21, 22, 26) zur Regulierung durch die Steuerungseinheit eingestellt werden.

6. Verfahren nach einem der voranstehenden Ansprüche, wobei die Reaktionsbedingungen für den Oxidationsprozess eingestellt werden, indem die Reaktionstemperatur und / oder der verfügbare Sauerstoff und / oder die Menge an verfügbarer Brennsubstanz (11) gezielt reguliert und/ oder eingestellt wird.

7. Verfahren nach einem der Ansprüche 2 bis 6, wobei die mindestens eine flüssige oder feste organische Substanz (11) vor dem katalytischen Oxidations- und Teiloxidationsprozess verdampft und in einem definierten Verhältnis mit Luft (12) vermischt wird und wobei der katalytische Oxidations- und Teiloxidationsprozess durch einen Edelmetallträgerkatalysator (20), einen Halbedelmetallträgerkatalysator, einen Übergangsmetallträgerkatalysator, einen Mischmetallträgerkatalysator oder einen Katalysator mit mindestens einem anderen vorzugsweise korrosionsbeständigen Metall katalysiert wird.

8. Verfahren nach einem der voranstehenden Ansprüche, wobei das Verfahren bei einer Temperatur durchgeführt wird, die kleiner ist als die Verbrennungstemperatur der verwendeten flüssigen oder festen organischen Substanz (11) bei Verbrennung derselben mit offener Flamme und wobei die mindestens eine flüssige oder feste organische Substanz aus einer Gruppe bestehend aus Alkoholen, Ketonen, Aldehyden, Kohlenwasserstoffen, Olefinen, Ethern, Carbonsäureestern, Fetten oder Ölen ausgewählt wird, insbesondere Alkohole, insbesondere Methanol oder Ethanol.

9. Verfahren nach einem der voranstehenden Ansprüche, wobei die blutsaugenden Gliederfüßer (2) in einer Fangvorrichtung (3) gefangen und festgehalten und / oder getötet werden.

10. Vorrichtung (1 a, 1 b) zur Erzeugung von CO₂, wobei die Vorrichtung (1 a, 1 b) eine Speichervorrichtung (10) für mindestens eine flüssige oder feste organisches Substanz (11) und ein Verdampfungsmodul (14) für die flüssige oder feste organisches Substanz (11) umfasst, **dadurch gekennzeichnet, dass** die Vorrichtung (1 a, 1 b) ein Reaktormodul (16) für die gesteuerte Oxidation und Teiloxidation der mindestens einen flüssigen oder festen organischen Substanz (11), eine Steuerungseinheit (80) und Mittel (13, 18, 21, 22, 26) zur Regulierung des Oxidations- und Teiloxidationsprozesses umfasst, wobei die Mittel (13, 18, 21, 22, 26) zur Regulierung des Oxidations- und Teiloxidationsprozesses über die Steuerungseinheit (80) regulierbar sind, so dass im Reaktormodul (16) definierte Reaktionsbedingungen zur gezielten Steuerung des Oxidations- und Teiloxidationsprozesses einstellbar sind und wobei die organische Substanz (11) aus einer Gruppe bestehen aus Alkoholen, Ketonen, Aldehyden, Kohlenwasserstoffen, Olefinen, Ethern, Carbonsäureestern, Fetten oder Ölen ausgewählt wird.

11. Vorrichtung (1a, 1 b) nach Anspruch 10, wobei die Mittel zur Regulierung des Oxidations- und Teiloxidationsprozesses Mittel (18) zur Einstellung der Reaktionstemperatur und / oder Mittel (21, 22) zur Regulierung der Luftzufuhr sind.

12. Vorrichtung (1 a, 1 b) Anspruch 11, wobei die Vorrichtung (1 a, 1 b) einen chemischen Sensor (85) zur Analyse der Zusammensetzung der Oxidations- und Teiloxidationsprodukte (P) umfasst und wobei die Mittel (13, 18, 21, 22, 26) zur Regulation des Oxidations- und Teiloxidationsprozesses anhand der sensorisch ermittelten Daten durch die Steuerungseinheit (80) einstellbar sind.

13. Vorrichtung (1a, 1b) einem der Ansprüche 10 bis 12, wobei das Reaktormodul (16) einen Katalysator (20) für die gesteuerte katalytische Oxidation und Teiloxidation der mindestens einen flüssigen oder festen organischen Substanz (11) umfasst, wobei der Katalysator (20) ein Edelmetallträgerkatalysator, ein Halbedelmetallträgerkatalysator, ein Übergangsmetallträgerkatalysator, ein Mischmetallträgerkatalysator oder ein Katalysator mit mindestens einem anderen vorzugsweise korrosionsbeständigen Metall ist und wobei das Metall des Katalysators (20) ausgewählt wird aus einer Gruppe, die aus Pd, Pt, Ru, Ag, Au, Rh, Cu, Mn oder einem Gemisch aus mindestens zwei dieser Metalle besteht und wobei das Trägermaterial ein anorganische Träger, vorzugsweise aus einem Material mit oxidischer oder Spinell- Struktur, ist.

14. Vorrichtung (1a, 1b) nach einem der Ansprüche 10 bis 13, wobei das Reaktormodul (16) ein Heizelement (18) und / oder eine Flammenrückschlagsicherung (50) umfasst.

15. Vorrichtung (1a, 1b) nach einem der Ansprüche 10 bis 14, wobei der Vorrichtung (1 a, 1 b) eine Fangvorrichtung (3) zum Anlocken und Fangen von blutsaugenden Gliederfüßern (2) zugeordnet ist und / oder wobei die Vorrichtung (1 a, 1 b) ein Seebeck- Element (40) zur Generierung von elektrischer Spannung umfasst, mit der die Vorrichtung (1 a, 1 b) und / oder die Fangvorrichtung (3) zumindest teilweise antreibbar sind.

## Claims

1. Method for generating CO₂ for attracting blood- sucking arthropods (2), **characterized in that** at least one liquid or solid organic substance (11) is reacted in an oxidation process in a targeted manner, whereby the oxidation process is specifically partly a full oxidation and partly a partial oxidation, thus forming at least one further partial oxidation product (P) in addition to CO₂, H₂O and heat, wherein the organic substance (11) is selected from a group consisting of alcohols, ketones, aldehydes, hydrocarbons, olefins, ethers, carboxylic acid esters, fats or oils.

2. Method according to claim 1, wherein the oxidation process is a catalytic oxidation process.

3. Method according to claim 1, wherein the oxidation and the partial oxidation are regulated through means (13, 18, 21, 22, 26) for regulating the oxidation process and the partial oxidation process and a control unit (80), whereby at least one partial oxidation product (P) is formed in a defined ratio to CO₂, wherein in particular between 0.1 ppm and 10% of the partial oxidation product (P) is generated.

4. Method according to claim 1 or 2, wherein the oxidation and the partial oxidation of ethanol is regulated through means (13, 18, 21, 22, 26) for regulating the oxidation process and partial oxidation process and a control unit (80), whereby precise amounts of ethanal, acetic acid, ethyl acetate and / or diethyl ether are produced in a defined ratio and in particular between 0.1 ppm and 10%.

5. Method according to one of the claim 2 or 3, wherein
* a desired composition of CO₂ and the partial oxidation product (P) is input into the control unit (80);
* a chemical analysis of the composition of CO₂ and the partial oxidation product (P) or partial oxidation products is carried out and
* means (13, 18, 21, 22, 26) for the regulation are adjusted by the control unit.

6. Method according to one of the preceding claim, wherein the reaction conditions for the oxidation process are adjusted by specifically regulating and/ or adjusting the reaction temperature and / or the available oxygen and / or the amount of available fuel substance (11).

7. Method according to one of the claim 2 to 6, wherein the at least one liquid or solid organic substance (11) is vaporized prior to the catalytic oxidation process and partial oxidation process and mixed with air (12) in a defined ratio and wherein the catalytic oxidation process and partial oxidation process are catalyzed by a noble metal catalyst (20), a semi- noble metal catalyst, a transition metal supported catalyst, a mixed metal catalyst or a catalyst support with at least one other, preferably corrosion- resistant metal.

8. Method according to one of the preceding claim, wherein the method is carried out at a temperature, which is less than the combustion temperature of the liquid or solid organic substance (11) used during combustion with an open flame and wherein the at least one liquid or solid organic substance is selected from a group consisting of alcohols, ketones, aldehydes, hydrocarbons, olefins, ethers, carboxylic acid esters, fats and oils, especially alcohols, especially methanol or ethanol.

9. Method according to one of the preceding claim, wherein the blood- sucking arthropods (2) are caught in a catching device (3) and retained and / or killed.

10. Device (1 a, 1 b) for generating CO₂, whereby the device (1 a, 1 b) comprises a storage means (10) for at least one liquid or solid organic substance (11) and an vaporization module (14) for the liquid or solid organic substance (11), **characterized in that** the device (1 a, 1 b) comprises a reactor module (16) for the controlled oxidation and partial oxidation of the at least one liquid or solid organic substance (11), a control unit (80) and means (13, 18, 21, 22, 26) for the regulation of the oxidation process and the partial oxidation process, wherein the means (13, 18, 21, 22, 26) for regulating the oxidation process and the partial oxidation process are controllable by the control unit (80), wherein defined reaction conditions can be set in the reactor module (16) for the targeted control of the oxidation process and the partial oxidation process and wherein the organic substance (11) is selected from a group consisting of alcohols, ketones, aldehydes, hydrocarbons, olefins, ethers, carboxylic acid esters, fats or oils.

11. Device (1 a, 1 b) according to claim 10, wherein the means for regulating the oxidation process and the partial oxidation process are means (18) for setting the reaction temperature and / or means (21, 22) for regulating the air supply.

12. Device (1 a, 1 b) according to claim 11, wherein the device (1 a, 1 b) comprises a chemical sensor (85) for the analysis of the composition of the oxidation products and partial oxidation products (P) and wherein the means (13, 18, 21, 22, 26) for regulating the oxidation process and the partial oxidation process are adjustable by the control unit (80) using the data obtained by the sensor.

13. Device (1 a, 1 b) according to one of the claims 10 to 12, wherein the reactor module (16) comprises a catalyst (20) for the targeted control of the catalyzed oxidation process and partial oxidation process of the at least one liquid or solid organic substance (11), wherein the catalyst (20) is a noble metal catalyst, a semi- noble metal catalyst, a transition metal supported catalyst, a mixed metal catalyst or a catalyst with at least one other, preferably corrosion-resistant metal and wherein the metal of the catalyst (20) is selected from the group consisting of Pd, Pt, Ru, Ag, Au, Rh, Cu, Mn or a mixture of at least two of these metals and wherein the support material is an inorganic support, preferably an material with an oxide structure or a spinel structure.

14. Device (1 a, 1 b) according to one of the claims 10 to 13, wherein the reactor module (16) comprises a heating element (18) and / or a flame arrestor (50).

15. Device (1 a, 1 b) according to one of the claims 10 to 14, wherein a catching device (3) for attracting and catching blood- sucking arthropods (2) is associated with the device (1 a, 1 b) and / or wherein the device (1 a, 1 b) comprises a Seebeck element (40) for generating electrical voltage, wherein the device (1 a, 1 b) and / or the catching device (3) are at least partially driven with this electric voltage.

## Revendications

1. Procédé de préparation de CO₂ destiné à attirer des arthropodes hématophages (2), **caractérisé par le fait qu'**au moins une substance organique (11) liquide ou solide est transformée, dans un processus d'oxydation, de manière ciblée en partie complètement et en partie partiellement de sorte que, outre le CO₂, le H₂O et de la chaleur, au moins un autre produit d'oxydation partielle (P) est produit, ladite substance organique (11) étant choisie dans un groupe comprenant les alcools, les cétones, les aldéhydes, les hydrocarbures, les oléfines, les éthers, les esters des acides carboxyliques, les graisses ou les huiles.

2. Procédé selon la revendication 1, dans lequel le processus d'oxydation est un processus d'oxydation catalytique.

3. Procédé selon la revendication 1, dans lequel l'oxydation et l'oxydation partielle sont régulées par des moyens (13, 18, 21, 22, 26) de régulation du processus d'oxydation et d'oxydation partielle et par une unité de commande (80) de sorte qu'au moins un produit d'oxydation partielle (P) est produit dans un rapport défini par rapport au CO₂, en particulier entre 0,1 ppm et 10 % de produit d'oxydation partielle (P) étant produits.

4. Procédé selon la revendication 1 ou 2, dans lequel l'oxydation et l'oxydation partielle d'éthanol sont régulées par des moyens (13, 18, 21, 22, 26) de régulation du processus d'oxydation et d'oxydation partielle et par une unité de commande (80) de sorte que des quantités définies d'acétaldéhyde, d'acide acétique, d'acétate d'éthyle et/ou d'éther diéthylique sont produites dans un rapport défini, en particulier compris entre 0,1 ppm et 10 %.

5. Procédé selon l'une quelconque des revendications 2 à 3, dans lequel
- une composition souhaitée de CO₂ et de produit d'oxydation partielle (P) est introduite dans ladite unité de commande (80) ;
- une analyse chimique de la composition de CO₂ et de produit d'oxydation partielle (P) ou de produits d'oxydation partielle est réalisée, et
- des moyens (13, 18, 21, 22, 26) de régulation sont réglés par ladite unité de commande.

6. Procédé selon l'une quelconque des revendications précédentes, dans lequel les conditions de réaction pour le processus d'oxydation sont réglées en régulant et/ou réglant de manière ciblée la température de réaction et/ou l'oxygène disponible et/ou la quantité de substance combustible (11) disponible.

7. Procédé selon l'une quelconque des revendications 2 à 6, dans lequel ladite au moins une substance organique (11) liquide ou solide est évaporée avant le processus catalytique d'oxydation et d'oxydation partielle et est mélangée avec de l'air (12) dans un rapport défini, et dans lequel le processus catalytique d'oxydation et d'oxydation partielle est catalysé par un catalyseur porteur de métal précieux (20), un catalyseur porteur de métal semi-précieux, un catalyseur porteur de métal de transition, un catalyseur porteur de métal mixte ou un catalyseur ayant au moins un autre métal, de préférence résistant à la corrosion.

8. Procédé selon l'une quelconque des revendications précédentes, dans lequel le procédé est mis en oeuvre à une température qui est inférieure à la température de combustion de la substance organique (11) liquide ou solide utilisée, lors de la combustion de celle-ci sur une flamme nue, et dans lequel ladite au moins une substance organique liquide ou solide est choisie dans un groupe comprenant les alcools, les cétones, les aldéhydes, les hydrocarbures, les oléfines, les éthers, les esters des acides carboxyliques, les graisses ou les huiles, en particulier les alcools, en particulier le méthanol ou l'éthanol.

9. Procédé selon l'une quelconque des revendications précédentes, dans lequel les arthropodes hématophages (2) sont attrapés et retenus et/ou tués dans un dispositif de capture (3).

10. Dispositif (1 a, 1b) de génération de CO₂, ledit dispositif (1 a, 1b) comprenant un dispositif de stockage (10) pour au moins une substance organique (11) liquide ou solide et un module d'évaporation (14) pour ladite substance organique (11) liquide ou solide, **caractérisé par le fait que** le dispositif (1 a, 1 b) comprend un module de réacteur (16) pour l'oxydation et l'oxydation partielle commandée de ladite au moins une substance organique (11) liquide ou solide, une unité de commande (80) et des moyens (13, 18, 21, 22, 26) de régulation du processus d'oxydation et d'oxydation partielle, lesdits moyens (13, 18, 21, 22, 26) de régulation du processus d'oxydation et d'oxydation partielle pouvant être régulés par l'intermédiaire de ladite unité de commande (80) de sorte que des conditions de réaction définies pour une commande ciblée du processus d'oxydation et d'oxydation partielle puissent être réglées dans ledit module de réacteur (16), et dans lequel ladite substance organique (11) est choisie dans un groupe comprenant les alcools, les cétones, les aldéhydes, les hydrocarbures, les oléfines, les éthers, les esters des acides carboxyliques, les graisses ou les huiles.

11. Dispositif (1 a, 1 b) selon la revendication 10, dans lequel les moyens de régulation du processus d'oxydation et d'oxydation partielle sont des moyens (18) de réglage de la température de réaction et/ou des moyens (21, 22) de régulation de l'alimentation en air.

12. Dispositif (1 a, 1 b) selon la revendication 11, dans lequel le dispositif (1 a, 1 b) comprend un capteur chimique (85) d'analyse de la composition des produits d'oxydation et d'oxydation partielle (P), et dans lequel lesdits moyens (13, 18, 21, 22, 26) de régulation du processus d'oxydation et d'oxydation partielle peuvent être réglés par ladite unité de commande (80) à partir des données déterminées par capteur.

13. Dispositif (1 a, 1 b) selon l'une quelconque des revendications 10 à 12, dans lequel ledit module de réacteur (16) comprend un catalyseur (20) pour l'oxydation et l'oxydation partielle catalytique commandée de ladite au moins une substance organique (11) liquide ou solide, ledit catalyseur (20) étant un catalyseur porteur de métal précieux (20), un catalyseur porteur de métal semi-précieux, un catalyseur porteur de métal de transition, un catalyseur porteur de métal mixte ou un catalyseur ayant au moins un autre métal, de préférence résistant à la corrosion, et dans lequel le métal du catalyseur (20) est choisi dans le groupe qui comprend Pd, Pt, Ru, Ag, Au, Rh, Cu, Mn ou un mélange d'au moins deux de ces métaux, et dans lequel le matériau porteur est un support organique, de préférence en une matière ayant une structure oxydique ou de spinelle.

14. Dispositif (1 a, 1 b) selon l'une quelconque des revendications 10 à 13, dans lequel ledit module de réacteur (16) comprend un élément de chauffage (18) et/ou un dispositif anti-retour de flamme (50).

15. Dispositif (1 a, 1 b) selon l'une quelconque des revendications 10 à 14, dans lequel un dispositif de capture (3) destiné à attirer et à attraper des arthropodes hématophages (2) est associé audit dispositif (1 a, 1 b), et/ou dans lequel le dispositif (1 a, 1 b) comprend un élément Seebeck (40) de génération de tension électrique par lequel ledit dispositif (1 a, 1 b) et/ou ledit dispositif de capture (3) peuvent être entraînés au moins en partie.
